# EUROPÄISCHE PATENTSCHRIFT

(11) **EP 1 394 021 B1**
(45) Veröffentlichungstag und Bekanntmachung des Hinweises auf die Patenterteilung: **18.04.2007**
(21) Anmeldenummer: 03017819.8
(22) Anmeldetag: 05.08.2003
(51) Int. Cl.: B62D 49/00, B62D 49/06, B62D 61/12, B60G 5/00

(54) **Stützradanordnung für Fahrzeug**
Support wheel arrangement for a vehicle
Agencement de support de roue pour véhicule

(30) Priorität: 28.08.2002 DE 10240236; 13.12.2002 DE 10258877
(43) Veröffentlichungstag der Anmeldung: 03.03.2004
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Terörde, Stefan, 48231 Warendorf (DE)

(56) Entgegenhaltungen:
- DE-A- 1 430 059
- FR-A- 1 369 554
- GB-A- 1 000 867
- GB-A- 1 423 808

## Beschreibung

Die Erfindung betrifft eine Stützradanordnung für Fahrzeuge gemäß den Oberbegriffen der Ansprüche 1 und 19.

Aus der FR 1 369 554 ist ein gattungsgemäßes, als Bagger ausgeführtes Fahrzeug bekannt. Der Bagger weist zwei Fahrzeugachsen und zwei zwischen den Rädern der Fahrzeugachsen angeordnet Stützräder auf. Die Stützräder werden jeweils von einem Stützrahmen aufgenommen, der mit dem Fahrzeugrahmen und mit der Fahrzeugachse verbunden ist.

Aus der DE 101 30 647 ist eine, als Mähdrescher ausgeführte, landwirtschaftliche Erntemaschine bekannt geworden, deren Vorderachse mit einem Stützräder tragenden Stützrahmen gelenkig verbunden ist, wobei der Stützrahmen zudem gelenkig mit dem Schrägförderer der landwirtschaftlichen. Erntemaschine in Wirkverbindung steht. Derartige Stützradanordnungen ermöglichen es, einen Teil der vorsatzgeräteabhängigen Belastungen auf dem Boden abzustützen, sodass der Einfluss der Masse des Vorsatzgerätes auf die Belastung der Vorderachse des Trägerfahrzeugs erheblich reduziert werden kann. Maßgeblich wird jedoch die von den Laufwerkachsen einer derartigen landwirtschaftlichen Erntemaschine auf den Boden zu übertragenden Lasten von der Masse des Trägerfahrzeugs und hier insbesondere von der Masse des in dem sogenannten Korntank gespeicherten Erntegutes bestimmt. Diese Zulademasse kann heute bisweilen 10 Tonnen betragen. Um hier ebenfalls eine Entlastung der Fahrwerksachsen des Trägerfahrzeugs zu erreichen, sind die bekannten Stützradanordnungen ungeeignet, da sie einen erheblichen Abstand zum Schwerpunkt des Trägerfahrzeugs aufweisen.

Unter dem Gesichtspunkt eines niedrigen Bodendrucks sind zudem sogenannte Tandemfahrwerke für landwirtschaftliche Erntemaschinen bekannt, deren Vorderachsen gemäß der DE 41 25 603 Tandemräder zugeordnet sind, wobei das rückwärtige Rad der Tandemanordnung über beispielsweise Hubzylinder am Trägerfahrzeug abgestützt wird. Ziel derartiger Ausführungen ist es, beim Arbeiten auf dem Feld einen niedrigen Bodendruck und eine gute Anpassung an unebenes Gelände aufgrund großer Aufstandsflächen und der pendelnden Aufhängung der Laufräder zu erzielen, während beim Fahren auf der Straße unter verschleißminimierenden Gesichtspunkten das vordere oder rückwärtige Laufrad des jeweiligen Tandems außer Eingriff gebracht, das jeweilige Tandemfahrwerk also gesperrt werden soll. Derartige Ausführungen ermöglichen zwar eine gute Bodenanpassung des Fahrwerks und niedrige Bodendrücke, sind aber nicht in der Lage, eine Entlastung der jeweiligen Fahrwerksachse herbeizuführen.

Der Erfindung liegt deshalb die Aufgabe zugrunde, eine Stützradanordnung für Fahrzeuge zu entwickeln, die eine fahrzeugmassenabhängige Entlastung zumindest einer Fahrwerksachse eines Fahrzeugs ermöglicht.

Erfindungsgemäß wird die Aufgabe durch eine Stützradanbrdnung für Fahrzeuge mit den kennzeichnenden Merkmalen der unabhängigen Ansprüche 1 und 19 gelöst.

Indem das wenigstens eine Stützrad von zumindest einem Stützrahmen aufgenommen wird, der mit zumindest einem Teil der Funktionsbaugruppen und der wenigstens einen Fahrzeugachse des Fahrwerks verbunden ist, wird sichergestellt, dass das wenigstens eine Stützrad eine fahrzeugmassenabhängige Entlastung der wenigstens einen Fahrwerksachse des Fahrzeugs ermöglicht.

Indem ferner die erfindungsgemäßen Stützräder von der mit ihr in Wirkverbindung stehenden Fahrzeugachse gezogen werden, wird im Gegensatz zu geschobenen Stützrädem deren Neigung zum Eingraben unterdrückt. Ein besonders problemloses Führen der Stützräder wird dann erreicht, wenn die Stützräder in der Spur der Laufräder der vorgeordneten Vorderachse geführt werden. Dies ermöglicht zudem, dass die Stützräder einen erheblich kleineren Durchmesser als die Laufräder der Vorderachse aufweisen können.

Auf konstruktiv besonders einfache Weise kann die Entlastung der Fahrwerksachse dadurch erreicht werden, dass der wenigstens eine Stützrahmen mit dem Fahrzeugrahmen gelenkig verbunden ist, wobei der Fahrzeugrahmen den Träger der Funktionsbaugruppen des Fahrzeugs bildet.

In einer vorteilhaften Weiterbildung der Erfindung wird der Stützrahmen des wenigstens einen Stützrades von einem ersten Tragarm und wenigstens einem weiteren Tragarm gebildet, wobei die Tragarme schwenkbeweglich mit dem

Fahrzeugrahmen und der wenigstens einen Fahrzeugachse verbunden sind, sodass das wenigstens eine Stützrad uneingeschränkte Schwenkbewegungen in vertikaler Richtung ausführen kann.

Eine besonders vorteilhafte Ausführung ergibt sich dann, wenn zumindest einer der Tragarme längenveränderlich ausgeführt ist, sodass stets sichergestellt ist, dass das wenigstens eine Stützrad unabhängig von der momentanen Stellung der Aufnahmevorrichtung permanenten Kontakt zum Boden hat und eine permanente Entlastung der Trägerfahrzeugachsen gewährleistet ist

In konstruktiv besonders einfacher Weise kann diese Längenveränderung wenigstens eines Tragarms dadurch erreicht werden, dass der oder die Tragarme als Hubzylinder und/oder Teleskoparm ausgeführt sind.

Damit die von den Tragarmen zwischen Fahrzeug und Boden zu übertragenden Kräfte verschleißreduzierend gedämpft übertragen werden, kann dem wenigstens einen längenveränderlichen Tragarm ein dessen Bewegung dämpfendes Element zugeordnet sein.

Damit das Kurvenfahrverhalten des Fahrzeugs durch die zwischen den Fahrzeugachsen angeordneten Stützräder nicht behindert wird, können das oder die Stützräder als Nachlaufräder ausgeführt sein, die freibeweglich der Fahrtrichtung des Fahrzeugs folgen. Eine besonders vorteilhafte Ausführung ergibt sich dann, wenn die erfindungsgemäßen Stützräder lenkbar sind und deren Lenkbarkeit an die Lenkbarkeit des Fahrzeugs gekoppelt ist.

Um den Verschleiß der Stützräder zu minimieren, sofern die Masse des Fahrzeugs gering ist, beispielsweise in unbeladenem Zustand, ist in einer weiteren vorteilhaften Ausgestaltung der Erfindung vorgesehen, dass das wenigstens eine Stützrad außer Eingriff bringbar an dem Fahrzeug angeordnet sein soll.

Eine besonders effiziente Entlastung der wenigstens einen Fahrwerkachse wird dann erreicht, wenn der mit dem die Funktionsbaugruppen tragenden Fahrzeugrahmen verbundene Tragarm nahe dem Schwerpunkt des Fahrzeugs an dem Fahrzeugrahmen angreift

Um flexibel auf Änderungen der Masse des Fahrzeugs reagieren zu können, ist in einer weiteren vorteilhaften Ausgestaltung der Erfindung vorgesehen, dass die Stützlast des oder der Stützräder einstellbar ist, wobei die Einstellung der Stützlasten der einzelnen Stützräder unabhängig voneinander erfolgen kann.

Eine besonders effiziente Stützlastverteilung wird dann erreicht, wenn die Verteilung der Stützlasten an die Masse des Fahrzeugs gekoppelt wird und insbesondere bei Fahrzeugen mit veränderlichen Fahrzeugmassen dynamisch an die sich ändernde Fahrzeugmasse angepasst wird.

Indem das wenigstens eine Stützrad von zumindest einem Stützrahmen aufgenommen wird, der mit zumindest einem Teil der Funktionsbaugruppen und der wenigstens einen Fahrzeugachse des Fahrwerks verbunden ist und dem wenigstens einen Stützrad eine im Wesentlichen unterhalb des Fahrzeugrahmens angeordnete Verschwenkeinrichtung zugeordnet ist, wird zugleich eine kompakte Bauweise der Stützradanordnung gewährleistet.

Dadurch dass sich die Tragkonsole von der Vorderachse des Fahrzeugs zum Fahrzeugende hin erstreckt, wird zudem genügend Raum zur Aufnahme des Fahrzeugrahmens geschaffen.

In vorteilhafter Weiterbildung der Erfindung wird die Tragkonsole von Bohrungen durchsetzt, die zur Verbindung der Tragkonsole mit dem Fahrzeugrahmen durch Befestigungselemente dienen. Damit kann auf konstruktiv einfache Weise der Fahrzeugrahmen oder die Fahrzeugachse gemäß der gewünschten Positionierung entlang der Bohrungen auf der Konsole verschoben werden. Auf diese Weise ist die Belastung der Fahrzeugachsen an spezielle Anforderungen angepassbar.

Indem die Vorderachse des Fahrzeugs vor der vertikalen Trennlinie des Fahrzeugrahmens angeordnet ist, wird hinreichend Platz für die die masseabhängigen Belastungen aufnehmende Verschwenkeinrichtung zum Adaptieren von Stützrädern und den dazugehörigen Stützrädern geschaffen. Dies hat den Vorteil, dass es keiner konstruktiv- und zeitaufwendigen Versetzung der vorhandenen Baugruppen innerhalb des Fahrzeuges bedarf.

Eine konstruktiv besonders einfache Ausführungsform wird dann erreicht, wenn die Verschwenkeinrichfung ein als Hubzylinder ausgeführtes Verstellmittel aufnimmt, welches durch entsprechende Bruckbeaufschlagung sehr flexible Anpassungen der von den Stützrädern auf den Boden zu übertragenden Kräfte ermöglicht, sodass letztlich eine sehr flexible agierende Entlastung der Fahrzeugachse realisierbar ist.

In vorteilhafter Weiterbildung der Erfindung weist der Tragarm eine Aussparung auf, durch die das Verstellmittel greift. Hierdurch wird der erforderliche Raum geschaffen, den die Kolbenstange bei Massenveränderungen benötigt, um entsprechend der Belastung zu verfahren. Dieser Raum ist ausschließlich unterhalb des Tragarms vorhanden, da oberhalb der Tragkonsole der Fahrzeugrahmen keinen freien Raum belässt. Auf diese Weise wird Bauraum eingespart.

Indem unterhalb des Tragarms im Bereich der Aussparung zumindest eine weitere Konsole angeordnet ist, die einen Anlenkungspunkt für das Verstellmittel aufweist, wird die Kraft direkt auf den verschwenkbaren Tragarm übertragen.

In seinem Endbereich wird der Tragarm horizontal und/oder vertikal zur jeweiligen Stützradseite hin schmaler. Indem dieser Teilbereich des Tragarms als schmaler Kröpfungsabschnitt ausgeführt ist, bedarf es keiner Umsetzung bereits vorhandener Funktionsbaugruppen unterhalb des Fahrzeugs, wie beispielsweise das Reinigungsgebläse bei einem Mähdrescher. Die Kröpfung des Tragarms hat ferner den Vorteil, dass die Stützräder in den Fahrspuren der vorauslaufenden Laufräder geführt werden. Auf diese Weise schaffen die den Laufrädern der Vorderachse nachgeordneten Stützräder keine weiteren Fahrspuren, die bodendruckabhängige Bodenschäden und hiermit einhergehende Bodenverdichtungen verursachen. Ferner wird ein gleichmäßiger Lauf der Stützräder erreicht, da die Stützräder in der vorgeebneten Spur der Fahrräder laufen.

Weitere vorteilhafte Ausgestaltungen sind Gegenstand weiterer Unteransprüche und werden nachfolgend anhand von Zeichnungen näher erläutert.

Es zeigen:
- Figur 1: ein erfindungsgemäßes Fahrzeug in Seitenansicht
- Figur 2: eine Ansicht von oben im Detail
- Figur 3: eine Detailansicht auf die Vorderachse, das Stützrad und die erfindungsgemäße Verschwenkeinrichtung in Seitenansicht
- Figur 4: eine Draufsicht auf die Verschwenkeinrichtung nach der Figur 3

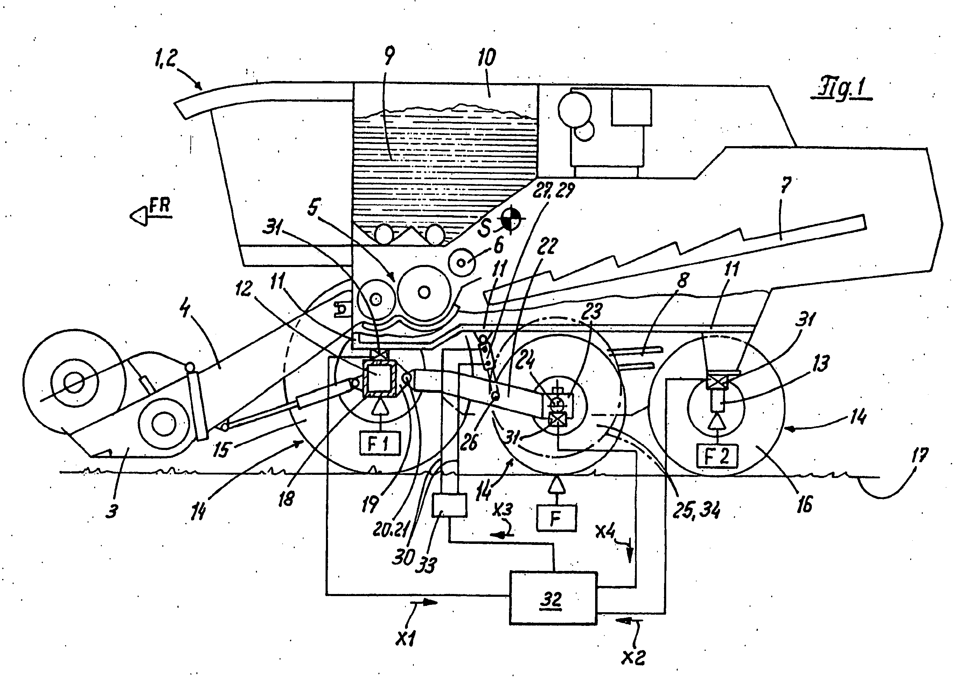

In Figur 1 ist ein als Mähdrescher 2 ausgeführtes Fahrzeug 1 dargestellt. Frontseitig ist dem Mähdrescher 2 ein an sich bekanntes Getreideschneidwerk 3 zugeordnet, welches in seinem vordem Bereich Erntegut annimmt und im rückwärtigen Bereich an einen schwenkbeweglich am Mähdrescher 2 angelenkten Schrägförderer 4 übergibt. Im rückwärtigen Bereich des Schrägförderers 4 wird das Erntegut den an sich bekannten und deshalb hier nur schematisch dargestellten Arbeitsorganen 5-8 zugeführt. Diese Arbeitsorgane 5-8 können unter anderem das Dreschwerk 5, Gutleitelemente 6, Korn-Stroh-Trennelemente 7 und beispielsweise eine Erntegutreinigungseinrichtung 8 sein. Über nicht dargestellte Förderelemente gelangt das gereinigte Erntegut 10 schließlich zur Zwischenspeicherung in einen Korntank 9. Die Arbeitsorgane 5-8 sowie der Korntank 9 bilden eine Auswahl möglicher Funktionsbaugruppen 5-9, die in nicht näher dargestellte Weise von einem Fahrzeugrahmen 11 aufgenommen werden. Im dargestellten Ausführungsbeispiel wird der Fahrzeugrahmen 11 untenseitig von einem aus Vorderachse 12 und Hinterachse 13 gebildeten Fahrwerk 14 aufgenommen, wobei die Vorderachse 12 und die Hinterachse 13 über Laufräder 15, 16 auf dem Boden 17 abgestützt werden.

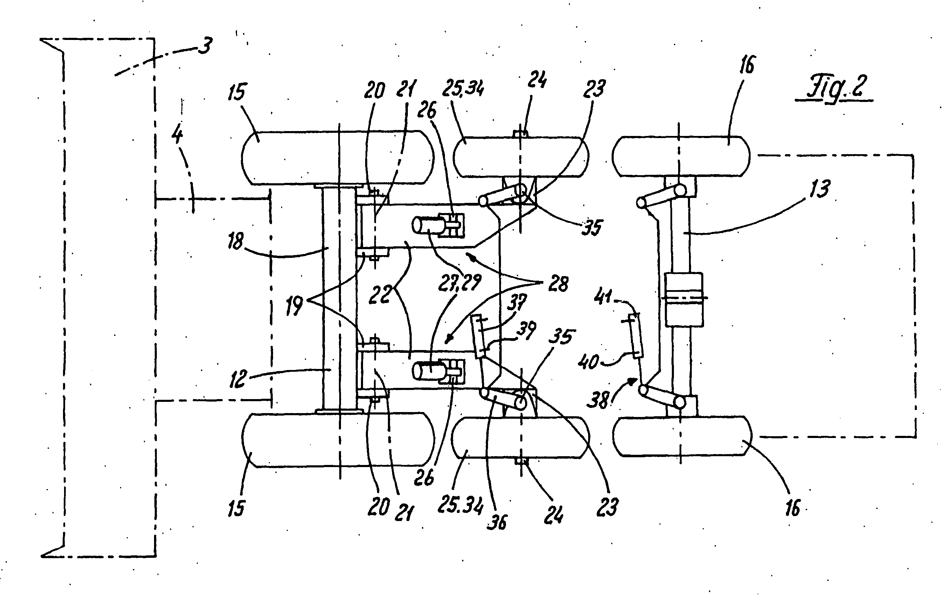

Gemäß Figur 2 sind dem Tragprofil 18 der Vorderachse 12 im rückwärtigen Bereich ein oder mehrere Adaptierflansche 19 drehfest zugeordnet. An ihren freien Enden sind die Adaptierflansche 19 von im einfachsten Fall als Haltebolzen 20 ausgeführten Schwenkachsen 21 durchsetzt. Die Schwenkachsen 21 werden von ersten Tragarmen 22 schwenkbeweglich umgriffen. An ihren freien Enden sind den ersten Tragarmen 22 Lagerstellen 23 angeformt, die von Achsen 24 durchsetzt werden, wobei diese Achsen 24 einenends zumindest ein erfindungsgemäßes Stützrad 25 aufnehmen, wobei das oder die Stützräder 25 unmittelbar hinter den ihnen vorauseilenden Laufrädern 15 der Vorderachse 12 des Fahrzeugs 1 angeordnet sein können, sodass die Stützräder 25 unmittelbar in den bereits durch diese Laufräder 15 bereiteten Fahrspuren laufen. Die ersten Tragarme 22 werden von Schwenkachsen 26 durchsetzt, die mit zumindest je einem weiteren Tragarm 27 schwenkbeweglich verbunden sind. Dieser weitere Tragarm 27 ist obenseitig ebenfalls gelenkig mit dem Fahrzeugrahmen 11 verbunden. In erfindungsgemäßer Weise bilden damit die ersten Tragarme 22 und die weiteren Tragarme 27 den Stützrahmen 28 des wenigstens einen Stützrades 25, welcher das wenigstens eine Stützrad 25 mit einer Fahrzeugachse 12, 13, im dargestellten Beispiel mit der Vorderachse 12 des Fahrwerks 14 und über den Fahrzeugrahmen 11 mit den Funktionsbaugruppen 5-9 des Mähdreschers 2 verbindet. Es liegt im Rahmen der Erfindung , dass dem Fahrzeug 1 ein oder mehrere derartige Stützrahmen 28 zugeordnet sein können. Die Anzahl der eingesetzten Stützrahmen 28 wird maßgeblich von der Größe der zu übertragenden Stützlasten F bestimmt.

Damit weiter in erfindungsgemäßer Weise die Stützlast F einstellbar ist, sind im dargestellten Ausführungsbeispiel die sich im Wesentlich vertikal erstreckenden weiteren Tragarme 27 als doppeltwirkende Hubzylinder 29 ausgeführt, sodass über die Druckverhältnisse im Leitungssystem 30 der Hubzylinder 29 die Stützlast F der Stützräder 25 variiert werden kann. Es liegt im Rahmen der Erfindung, dass sowohl die ersten Tragarme 22 als auch die weiteren Tragarme 27 längenveränderlich ausgeführt sein können. Dies hat insbesondere den Vorteil, dass die Position der Aufstandsfläche des oder der Stützräder 25 veränderbar ist. Je nach der Größe der abzustützenden Lasten F wäre es dann möglich die Stützräder 25 in eine zur Vorderachse 12 oder zum Schwerpunkt S des Fahrzeugs 1 nähere oder weiter entfernte Position zu verbringen. Es ist auch denkbar, die ersten Tragarme 22 und/oder die weiteren Tragarme 27 als Teleskoparme auszuführen, deren Teilsegmente relativ zueinander verschoben werden können, wodurch ebenfalls eine Einstellung der Stützlast F an dem oder den Stützräder 25 möglich wird. Zudem soll es möglich sein, dass die Stützlasten F der einzelnen Stützräder 25 unabhängig voneinander einstellbar sind, wobei sich die Größe der jeweiligen Stützlast dynamisch mit der Masse des Fahrzeugs 1 ändern soll. Dies hat insbesondere den Vorteil, dass die Stützlast F der Stützräder 25 mit steigendem Korntankinhalt 10 kontinuierlich erhöht werden kann. Im einfachsten Fall kann dies dadurch erreicht werden, dass dem Mähdrescher 2 an einer oder mehreren Stellen an sich bekannt Lastaufnehmer 31 zugeordnet sind, die die Belastung der jeweiligen Achse 12, 13, 24 sensieren, wobei hier der Einsatz von Dehnmessstreifen zur Ermittlung der Durchbiegung der Achsen 12, 13, 24 oder Drucksensoren zur Ermittlung des Reifendrucks der Laufräder 15, 16 denkbar ist. Die lastsensierenden Aufnehmer 31 generieren in Abhängigkeit von der jeweiligen Stützlast F1, F2 Eingangssignale X1 X2, die in einer elektronischen Verrechnungseinheit 32 in Abhängigkeit von einem vordefinierten und gegebenenfalls beliebig änderbaren Lastverteilungsverhältnis ein Ausgangssignal X3 erzeugen, welches über ein beliebig ausgeführtes Schaltventil 33 zu einer Druckbeaufschlagung oder Druckentlastung des Hubzylinders 29 des wenigstens einen Stützrades 25 führt. Auf diese Weise wird es möglich, die Stützlast F des wenigstens einen Stützrades 25 in Abhängigkeit von den Stützlasten F1, F2 der Achsen 12, 13 des Fahrzeugs 1 einzustellen. Ferner kann dem wenigstens einen Stützrad 25 ein lastsensierender Aufnehmer 31 zugeordnet sein, der ein von der Stützlast F abhängiges Eingangssignal X4 generiert, welches in der elektronischen Verrechnungseinheit 32 als Maß für den durch das Fahrzeug 1 auf den Boden 17 wirkenden Druck heranziehbar ist.

Damit neben der Veränderung der von den Stützrädern 25 übertragenen Stützlasten F die bodenunebenheitsbedingten Stoßbelastungen, die über die erfindungsgemäßen Stützrahmen 28 in das Fahrzeug 1 eingeleitet werden gering bleiben, können den ersten Tragarmen 22 und/oder den weiteren Tragarmen 27 nicht näher dargestellte Dämpfungselemente zugeordnet sein, die die Energie dieser Stoßbelastungen zumindest teilweise absorbieren.

Damit die Lenkbarkeit des Fahrzeugs nicht durch die zusätzlichen Stützräder 25 behindert wird, können die Stützräder 25 im einfachsten Fall als sogenannte Nachlaufräder 34 ausgeführt sein, die freibeweglich um vertikale Schwenkachsen 35 bewegbar und insbesondere bei Rückwärtsfahrt in an sich bekannter Weise feststellbar sind, sodass die Stützräder 25 der Fahrtrichtung FR des Fahrzeugs 1, insbesondere bei Kurvenfahrt, zwanglos folgen können. Eine besonders vorteilhafte Ausführung der Stützräder 25 wird dann erreicht, wenn den Stützrädern 25 ein an sich bekannter und deshalb nicht näher erläuterter Lenkmechanismus 36 zugeordnet ist, der beispielsweise mittels eines Lenkzylinders 37 verschwenkbar ist. Wird nun das Lenksystem 36, 37 der Stützräder mit dem Lenksystem 38 im einfachsten Fall durch Koppelung der Leitungssysteme 39, 40 der jeweiligen Lenkzylinder 37, 41 verbunden, so kann erreicht werden, dass die erfindungsgemäßen Stützräder 25 die Lenkbewegung der gelenkten Laufräder 16 der Hinterachse 13 des Fahrzeugs 1 vollständig oder nur teilweise nachvollziehen.

Um den Reifenverschleiß der Stützräder 25 zu minimieren sind die schwenkbeweglich an der Vorderachse 12 und dem Fahrzeugrahmen 11 angelenkten Stützrahmen 28 ferner in eine Position verschwenkbar, in der die Stützräder 25 gemäß der strichpunktierten Darstellung in Figur 1 ihren Kontakt zum Boden 17 verlieren

Indem die weiteren Tragarme 27 eine im Wesentlichen vertikale Position einnehmen, ermöglichen sie eine besonders kraftgerechte Übertragung der Stützlasten F vom Fahrzeugrahmen 11 auf den Boden 17. Dies gilt um so mehr, je dichter die weiteren Tragarme 27 in Längsrichtung des Fahrzeugs 1 dem Schwerpunkt S des Fahrzeugs zugeordnet am Fahrzeugrahmen 11 adaptiert sind.

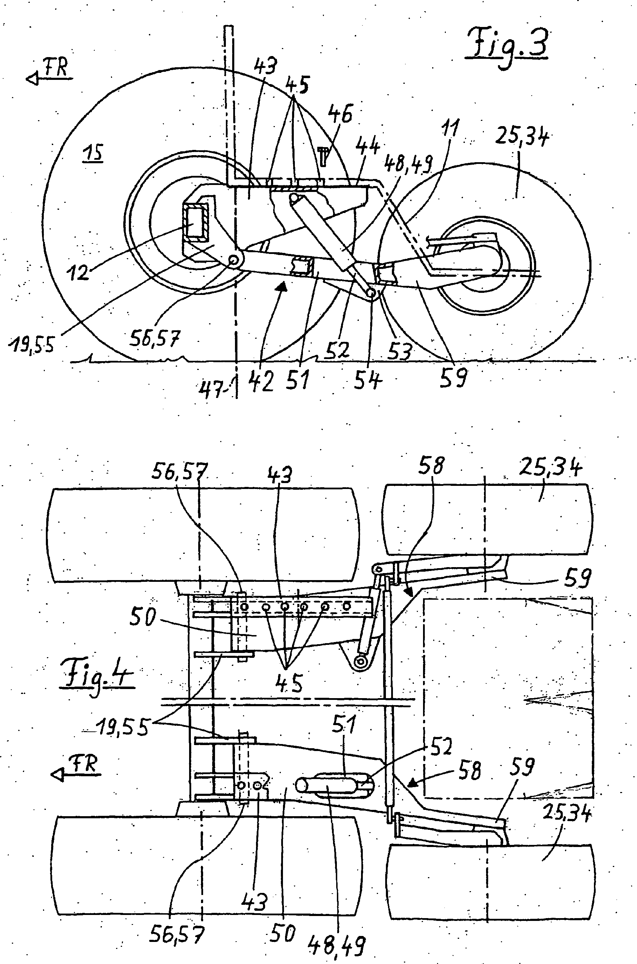

In den Figuren 3 und 4 ist ein weiteres Ausführungsbeispiel der erfindungsgemäßen Stützradanordnung 25, 34 im Detail dargestellt. Zwischen den Laufrädern 15, 16 der Vorder- und Hinterachse 12, 13 des Fahrwerks 14 ist die erfindungsgemäße Verschwenkeinrichtung 42 zum Adaptieren von Stützrädern 25 angeordnet.

Im rückwärtigen Bereich der Vorderachse 12 der Laufräder 15 nimmt diese beidseitig Tragkonsolen 43 drehfest auf. Die Tragkonsolen 43 erstreckt sich horizontal von dem rückwärtigen Bereich der Vorderachse 12 ausgehend im Wesentlichen zum Fahrzeugende hin, sodass für den auf den Tragkonsolen 43 aufsitzenden Fahrzeugrahmen 11 große Abstützflächen 44 an den Tragkonsolen 43 angeformt sein können. Jede der Tragkonsolen 43 ist entlang ihrer Abstützfläche 44 mit Bohrungen 45 versehen. Um eine feste Verbindung der jeweiligen Tragkonsole 43 mit dem Fahrzeugrahmen 11 herzustellen, wird mittels Befestigungselementen 46 der Fahrzeugrahmen 11 mit der jeweiligen Tragkonsole 43 drehfest verbunden. Die Vielzahl der Bohrungen 45 ermöglicht es, den Fahrzeugrahmen 11 um ein gewünschtes Maß entlang der Bohrungen 45 zu versetzen. Ebenso ist es möglich die Vorderachse 12 entlang der Bohrungen 45 zu verschieben. Demgemäss kann der Fahrzeugrahmen 11 und/oder die Vorderachse 12 um eine entsprechende Anzahl von Bohrungen 45 in Fahrtrichtung FR oder in die entgegengesetzte Richtung versetzt werden. Auf diese Weise ist die Vorderachse 12 vor der, den Fahrzeugrahmen 11 von den Einzugsorganen 3, 4 trennenden vertikalen Trennlinie 47, angeordnet, wodurch Raum zwischen der Vorderachse 12 und der Hinterachse 13 für die Verschwenkeinrichtung 42 geschaffen wird.

In jede der Tragkonsolen 43 ist ein Verstellmittel 48, welches als Hubzylinder 49 ausgeführt ist, schwenkbeweglich integriert. Dieser Hubzylinder 49 steht wiederum mit einem unterhalb der Tragkonsole 43 verlaufenden Tragarm 50 in Wirkverbindung. Um eine schwenkbewegliche Verbindung der Tragkonsole 43 mit dem Tragarm 50 herzustellen, ist in den Tragarm 50 eine Aussparung 51 eingelassen. Durch diese Aussparung 51 verfährt die Kolbenstange 52 des Hubzylinders 49 bei unterschiedlich stark auftretenden Belastungen. Damit die durch die Stoß- oder Massenbelastungen verursachten Kräfte von dem Hubzylinder 49 auf den Tragarm 50 übertragen werden können, ist im Bereich der Aussparung 51 eine weitere Konsole 53 drehfest an dem Tragarm 50 angeordnet. In diese Konsole 53 ist ein Haltebolzen 54 integriert. Mit diesem Haltebolzen 54 ist die Kolbenstange 52 schwenkbeweglich verbunden.

Durch diese Anordnung wird gewährleistet, dass stets genügend Raum, selbst bei sehr hohen Massen- oder Stoßbelastungen, für das Verfahren der Kolbenstange 52 unterhalb des Fahrzeugs 1, 2 vorhanden ist.

Neben der Tragkonsole 43 sind der Vorderachse 12 beidseitig die bereits beschriebenen Adaptierflansche 19 drehfest zugeordnet. Im dargestellten Ausführungsbeispiel bilden die Adaptierflansche 19 weitere Konsolen 55, die wie die Tragkonsole 43 der unmittelbaren Aufnahme fahrzeugmassenabhängig zunehmender Kräfte dienen. Das freie Ende jeder Konsole 55 ist von einer Schwenkachse 56, die beispielsweise als schwenkbeweglicher Haltebolzen 57 ausgeführt sein kann, durchsetzt.

Der Haltebolzen 57 wird von dem Tragarm 50 schwenkbeweglich umgriffen, wobei sich jeder Tragarm 50 von der jeweiligen Konsole 55 zu dem entsprechenden Stützrad 25 erstreckt und unterhalb der jeder Tragkonsole 43 verläuft.

In der Figur 4 ist eine Draufsicht auf den in der Figur 3 abgebildeten Radsatz dargestellt, welche die besondere Ausgestaltung der Tragarme 50 zeigt. Die Stützräder 25 laufen bodenschonend in der Spur der vorauseilenden Laufräder 15. Um diese Anordnung der Stützräder 25 zu ermöglichen, ist das der Vorderachse 12 abgewandte freie Ende der Tragarme 50 in deren Endbereichen mit einem seitlichen, nach außen hin gerichteten Seitenversatz 58, ausgebildet.

Um eine möglichst effiziente Kraftübertragung zu gewährleisten, setzt dieser nach außen gerichtete Seitenversatz 58 im rückwärtigen Bereich der Laufräder 15 an und erstreckt sich soweit, als dass die Stützräder 25 ihre Anordnung zwischen der Vorderachse 12 und der Hinterachse 13 in den durch die Laufräder 15 verursachten Spuren finden. Damit der Tragarm 50 die masseabhängigen Belastung aufnehmen kann, ist er bis zu seiner Knickung entsprechend breit ausgestaltet. Nach der Knickung geht der Tragarm 50 in seinem Endbereich in einen schmaleren Kröpfungsabschnitt 59 über. Dieser Kröpfungsabschnitt 59 kann in horizontaler und/oder in vertikaler Richtung verjüngt ausgebildet sein. Diese Verjüngung trägt auch dem nur begrenz in diesem Bereich des Fahrzeugs zur Verfügung stehenden Bauraum Rechnung.

Es liegt im Rahmen der Erfindung die beschriebene Vorrichtung auf beliebige Land-, Forst- und Straßenfahrzeuge anzuwenden, um die beschriebenen Effekte zu erzielen.

### Bezugszeichenliste

- 1: Fahrzeug
- 2: Mähdrescher
- 3: Getreideschneidwerk
- 4: Schrägförderer
- 5: Dreschwerk
- 6: Gutleitelement
- 7: Korn-Stroh-Trennelemeni
- 8: Reinigungseinrichtung
- 9: Erntegut
- 10: Korntank
- 11: Fahrzeugrahmen
- 12: Vorderachse
- 13: Hinterachse
- 14: Fahrwerk
- 15: Laufräder
- 16: Laufräder
- 17: Boden
- 18: Tragprofil
- 19: Adaptierflansch
- 20: Haltebolzen
- 21: Schwenkachse
- 22: erster Tragarm
- 23: Lagerstelle
- 24: Achse
- 25: Stützrad
- 26: Schwenkachse
- 27: weiterer Tragarm
- 28: Stützrahmen
- 29: Hubzylinder
- 30: Leitungssystem
- 31: Lastaufnehmer
- 32: Verrechnungseinheit
- 33: Schaltventil
- 34: Nachlaufrad
- 35: Schwenkachse
- 36: Lenkmechanismus
- 37: Lenkzylinder
- 38: Lenksystem
- 39: Leitungssystem
- 40: Leitungssystem
- 41: Lenkzylinder
- 42: Verschwenkeinrichtung
- 43: Tragkonsole
- 44: Abstützfläche
- 45: Bohrung
- 46: Befestigungselemente
- 47: Trennlinie
- 48: Verstellmittel
- 49: Kolbenzylindereinheit
- 50: Tragarme
- 51: Aussparung
- 52: Kolbenstange
- 53: Konsole
- 54: Haltebolzen
- 55: Konsole
- 56: Schwenkachse
- 57: Haltebolzen
- 58: Seitenversatz
- 59: Kröpfungsabschnitt
- F: Stützlast
- F1,2: Stützlast
- FR: Fahrtrichtung
- S: Schwerpunkt
- X1,2: Eingangssignale
- X3: Ausgangssignal
- X4: Eingangssignal

## Patentansprüche

1. Stützradanordnung für Fahrzeug, wobei das Fahrzeug über zumindest einen die Funktionsbaugruppen des Fahrzeugs tragenden Fahrzeugrahmen verfügt, der über ein zumindest zwei Fahrzeugachsen aufweisendes Fahrwerk auf dem Boden abgestützt wird,
**dadurch gekennzeichnet,**
**dass** das wenigstens eine Stützrad (25) von zumindest einem Stützrahmen (28) aufgenommen wird und der Stützrahmen (28) mit zumindest einem Teil der Funktionsbaugruppen (5-9) und wenigstens einer Fahrzeugachse (12,13) des Fahrwerks (14) in Wirkverbindung steht, wobei das wenigstens eine Stützrad (25) in einem Bereich zwischen den zumindest zwei Fahrzeugachsen (12, 13) angeordnet ist und wobei die Stützlast (F) des wenigstens einen Stützrades (25) in Abhängigkeit von der Masse des Fahrzeugs (1, 2) automatisch einstellbar ist

2. Stützradanordnung für Fahrzeug nach Anspruch 1,
**dadurch gekennzeichnet,**
**dass** das wenigstens eine Stützrad (25) einen kleineren Durchmesser aufweist als das ihm vorauseilende Laufrad (15) der Vorderachse (12) des Fahrwerks (14).

3. Stützradanordnung für Fahrzeug nach einem oder mehreren der vorhergehenden Ansprüche,
**dadurch gekennzeichnet,**
**dass** das wenigsten eine Stützrad (25) in der Spur des dem jeweiligen Stützrad (25) vorgeordneten Laufrades (15) der Vorderachse läuft.

4. Stützradanordnung für Fahrzeug nach einem oder mehreren der vorhergehenden Ansprüche,
**dadurch gekennzeichnet,**
**dass** die Wirkverbindung des zumindest einen Stützrahmens (28) mit zumindest einem Teil der Funktionsbaugruppen (5-9) durch gelenkige Verbindung des Stützrahmens (28) mit dem Fahrzeugrahmen (11) erreicht wird.

5. Stützradanordnung für Fahrzeug nach einem oder mehreren der vorhergehenden Ansprüche,
**dadurch gekennzeichnet,**
**dass** der Stützrahmen (28) von einem ersten Tragarm (22) und wenigstens einem weiteren Tragarm (27) gebildet wird, wobei der erste Tragarm (22) mit zumindest einem Teil der Funktionsbaugruppen (5-9) des Fahrzeugs (1, 2) und der wenigstens eine weitere Tragarm (27) mit der wenigstens einen Fahrzeugachse (12, 13) des Fahrwerks (14) in Wirkverbindung steht.

6. Stützradanordnung für Fahrzeug nach einem oder mehreren der vorhergehenden Ansprüche,
**dadurch gekennzeichnet,**
**dass** die Tragarme (22, 27) schwenkbeweglich mit zumindest einem Teil der Funktionsbaugruppen (5-9) und der wenigstens einen Fahrzeugachse (12,13) des Fahrwerks (14) verbunden sind.

7. Stützradanordnung für Fahrzeug nach einem oder mehreren der vorhergehenden Ansprüche,
**dadurch gekennzeichnet,**
**dass** zumindest ein Tragarm (22, 27) längenveränderlich ausgeführt ist.

8. Stützradanordnung für Fahrzeug nach Anspruch 7,
**dadurch gekennzeichnet,**
**dass** der wenigstens eine längenveränderliche Tragarm (22, 27) als Hubzylinder (29) ausgeführt ist.

9. Stützradanordnung für Fahrzeug nach Anspruch 7,
**dadurch gekennzeichnet,**
**dass** der wenigstens eine längenveränderliche Tragarm (22, 27) als Teleskoparm ausgeführt ist.

10. Stützradanordnung für Fahrzeug nach einem oder mehreren der vorhergehenden Ansprüche,
**dadurch gekennzeichnet,**
**dass** die Längenänderung des Teleskoparms (27) und/oder des Hubzylinders (29) durch wenigstens ein Dämpfungselement gedämpft wird.

11. Stützradanordnung für Fahrzeug nach einem oder mehreren der vorhergehenden Ansprüche,
**dadurch gekennzeichnet,**
**dass** zumindest ein Stützrad (25) als Nachlaufrad (34) ausgeführt ist.

12. Stützradanordnung für Fahrzeug nach einem oder mehreren der vorhergehenden Ansprüche,
**dadurch gekennzeichnet,**
**dass** zumindest ein Stützrad (25) lenkbar ausgeführt und die Lenkbewegung an die Lenkbewegung des Fahrzeugs (1) gekoppelt ist.

13. Stützradanordnung für Fahrzeug nach einem oder mehreren der vorhergehenden Ansprüche,
**dadurch gekennzeichnet,**
**dass** das zumindest eine Stützrad (25) in und außer Eingriff bringbar ist.

14. Stützradanordnung für Fahrzeug nach einem oder mehreren der vorhergehenden Ansprüche,
**dadurch gekennzeichnet,**
**dass** der wenigstens eine weitere Tragarm (27) im Bereich des Schwerpunkts (S) des Fahrzeugs (1, 2) an dem Fahrzeug (1, 2) angreift.

15. Stützradanordnung für Fahrzeug nach einem oder mehreren der vorhergehenden Ansprüche,
**dadurch gekennzeichnet,**
**dass** die Stützlast (F) einer Vielzahl von Stützrädern (25) unabhängig voneinander einstellbar ist.

16. Stützradanordnung für Fahrzeug nach einem oder mehreren der
vorhergehenden Ansprüche,
**dadurch gekennzeichnet,**
**dass** die Stützlast (F) des wenigstens einen Stützrades (25) dynamisch einstellbar ist.

17. Stützradanordnung für Fahrzeug, nach einem oder mehreren der vorhergehenden Ansprüche,
**dadurch gekennzeichnet,**
**dass** das wenigstens eine Stützrad (25) von zumindest einem Stützrahmen (28) aufgenommen wird und der Stützrahmen (28) mit zumindest einem Teil der Funktionsbaugruppen (5-9) und wenigstens einer Fahrzeugachse (12,13) des Fahrwerks (14) in Wirkverbindung steht, wobei das wenigstens eine Stützrad (25) in einem Bereich zwischen den zumindest zwei Fahrzeugachsen (12, 13) angeordnet ist und wobei dem wenigstens einen Stützrad (25) eine Verschwenkeinnchtung (42) zugeordnet ist und die Verschwenkeinrichtung (42) im wesentlichen unterhalb des Fahrzeugrahmens (11) angeordnet und mit zumindest einer zwischen dem Fahrzeugrahmen (11) und der Fahrzeugachse (12) angeordneten Tragkonsole (43) verbunden ist

18. Stützradanordnung für Fahrzeug nach einem oder mehreren der vorhergehenden Ansprüche
**dadurch gekennzeichnet, dass**
sich die wenigstens eine Tragkonsole (43) im wesentlichen von der Fahrzeugachse (12) zum Fahrzeugende hin erstreckt.

19. Stützradanordnung für Fahrzeug nach einem oder mehreren der vorhergehenden Ansprüche,
**dadurch gekennzeichnet, dass**
die Tragkonsole (43) Bohrungen (45) aufweist, wobei über die Bohrungen (45) eine feste Verbindung mittels Befestigungselementen (46) zwischen der Tragkonsole (43) und dem Fahrzeugrahmen (11) hergestellt wird.

20. Stützradanordnung für Fahrzeug nach einem oder mehreren der vorhergehenden Ansprüche,
**dadurch gekennzeichnet, dass**
der Fahrzeugrahmen (11) und/oder die Fahrzeugachse (12) entlang dieser Bohrungen (45) relativ zueinander versetzt werden können.

21. Stützradanordnung für Fahrzeug nach einem oder mehreren der vorhergehenden Ansprüche,
**dadurch gekennzeichnet, dass**
die Fahrzeugachse (12) vor der vertikalen Trennlinie (47) des Fahrzeugrahmens (11) liegt

22. Stützradanordnung für Fahrzeug nach einem oder mehreren der vorhergehenden Ansprüche,
**dadurch gekennzeichnet, dass**
die Tragkonsole (43) mit wenigstens einer weiteren Konsole (55) in Wirkverbindung steht, wobei die weitere Konsole (55) mit zumindest einem Tragarm (50) schwenkbeweglich verbunden ist und die Tragkonsole (43) durch zumindest ein Verstellmittel (48) den Tragarm (50) abstützt, wobei das Verstellmittel (48) durch einen Hubzylinder (49) gebildet wird.

23. Stützradanordnung für Fahrzeug nach einem oder mehreren der vorhergehenden Ansprüche,
**dadurch gekennzeichnet, dass**
sich der Hubzylinder (49) in Abhängigkeit von den unterschiedlichen Massenbelastungen verstellt

24. Stützradanordnung für Fahrzeug nach einem oder mehreren der vorhergehenden Ansprüche,
**dadurch gekennzeichnet, dass**
der Tragarm (50) wenigstens eine Aussparung (51) aufweist, durch die die Kolbenstange (52) oder das Verstellmittel (48) durchgreift und wobei unterhalb des Tragarms (50) im Bereich der Aussparung (51) zumindest eine weitere Konsole (53) angeordnet ist, die einen Anlenkpunkt (54) für die Kolbenzylindereinheit (49) aufweist.

25. Stützradanordnung für Fahrzeug nach einem oder mehreren der vorhergehenden Ansprüche,
**dadurch gekennzeichnet, dass**
der Tragarm (50) in seinem mit dem Stützrad (25) in Wirkverbindung stehenden Endbereich horizontal und/oder vertikal zur jeweiligen Laufradseite (15,16) hin schmaler wird und wobei der Tragarm (50) in seinem Endbereich mit einem Seitenversatz (58) in einen schmaleren Kröpfungsabschnitt (59) übergeht.

26. Stützradanordnung für Fahrzeug nach einem oder mehreren der vorhergehenden Ansprüche,
**dadurch gekennzeichnet, dass**
der Tragarm (50) in horizontaler und/oder vertikaler Richtung mindestens einen Seitenversatz (58) aufweist und das Stützrad (25) am äußeren Kröpfungsabschnitt (59) angeordnet ist.

## Claims

1. A support wheel arrangement for a vehicle, wherein the vehicle has at least one vehicle frame which carries the functional assemblies of the vehicle and which is supported on the ground by way of a chassis having at least two vehicle axles,
**characterised in that**
the at least one support wheel (25) is mounted by at least one support frame (28) and the support frame (28) is operatively connected to at least a part of the functional assemblies (5-9) and at least one vehicle axle (12, 13) of the chassis (14), wherein the at least one support wheel (25) is arranged in a region between the at least two vehicle axles (12, 13) and wherein the support load (F) of the at least one support wheel (25) is adjustable automatically in dependence on the mass of the vehicle (1, 2).

2. A support wheel arrangement for a vehicle according to claim 1 **characterised in that** the at least one support wheel (25) is of a smaller diameter than the wheel (15) which leads it of the front axle (12) of the chassis (14).

3. A support wheel arrangement for a vehicle according to one of the preceding claims **characterised in that** the at least one support wheel (25) runs in the track of the wheel (15) of the front axle, which is arranged in front of the respective support wheel (25).

4. A support wheel arrangement for a vehicle according to one or more of the preceding claims **characterised in that** the operative connection of the at least one support frame (28) to at least a part of the functional assemblies (5-9) is achieved by pivotal connection of the support frame (28) to the vehicle frame (11).

5. A support wheel arrangement for a vehicle according to one or more of the preceding claims **characterised in that** the support frame (28) is formed by a first carrier arm (22) and at least one further carrier arm (27), wherein the first carrier arm (22) is operatively connected to at least a part of the functional assemblies (5-9) of the vehicle (1, 2) and the at least one further carrier arm (27) is operatively connected to the at least one vehicle axle (12, 13) of the chassis (14).

6. A support wheel arrangement for a vehicle according to one or more of the preceding claims **characterised in that** the carrier arms (22, 27) are pivotably movably connected to at least a part of the functional assemblies (5-9) and the at least one vehicle axle (12, 13) of the chassis (14).

7. A support wheel arrangement for a vehicle according to one or more of the preceding claims **characterised in that** at least one carrier arm (22, 27) is of variable length.

8. A support wheel arrangement for a vehicle according to claim 7 **characterised in that** the at least one variable-length carrier arm (22, 27) is in the form of a stroke cylinder (29).

9. A support wheel arrangement for a vehicle according to claim 7 **characterised in that** the at least one variable-length carrier arm (22, 27) is in the form of a telescopic arm.

10. A support wheel arrangement for a vehicle according to one or more of the preceding claims **characterised in that** the variation in length of the telescopic arm (27) and/or the stroke cylinder (29) is damped by at least one damping element.

11. A support wheel arrangement for a vehicle according to one or more of the preceding claims **characterised in that** at least one support wheel (25) is in the form of a trailing wheel (34).

12. A support wheel arrangement for a vehicle according to one or more of the preceding claims **characterised in that** at least one support wheel (25) is steerable and the steering movement is coupled to the steering movement of the vehicle (1).

13. A support wheel arrangement for a vehicle according to one or more of the preceding claims **characterised in that** the at least one support wheel (25) can be brought into and out of engagement.

14. A support wheel arrangement for a vehicle according to one or more of the preceding claims **characterised in that** the at least one further carrier arm (27) engages the vehicle (1, 2) in the region of the centre of gravity (S of the vehicle (1, 2).

15. A support wheel arrangement for a vehicle according to one or more of the preceding claims **characterised in that** the support load (F) of a plurality of support wheels (25) is adjustable independently of each other.

16. A support wheel arrangement for a vehicle according to one or more of the preceding claims **characterised in that** the support load (F) of the at least one support wheel (25) is dynamically adjustable.

17. A support wheel arrangement for a vehicle according to one or more of the preceding claims **characterised in that** the at least one support wheel (25) is mounted by at least one support frame (28) and the support frame (28) is operatively connected to at least a part of the functional assemblies (5-9) and at least one vehicle axle (12, 13) of the chassis (14), wherein the at least one support wheel (25) is arranged in a region between the at least two vehicle axles (12, 13) and wherein a pivoting device (42) is associated with the at least one support wheel (25) and the pivoting device (42) is arranged substantially beneath the vehicle frame (11) and is connected to at least one carrier bracket (43) arranged between the vehicle frame (11) and the vehicle axle (12).

18. A support wheel arrangement for a vehicle according to one or more of the preceding claims **characterised in that** the at least one carrier bracket (43) extends substantially from the vehicle axle (12) to the vehicle end.

19. A support wheel arrangement for a vehicle according to one or more of the preceding claims **characterised in that** the carrier bracket (43) has bores (45), wherein a fixed connection is made between the carrier bracket (43) and the vehicle frame (11) by way of the bores (45) by means of fixing elements (46).

20. A support wheel arrangement for a vehicle according to one or more of the preceding claims **characterised in that** the vehicle frame (11) and/or the vehicle axle (12) can be displaced relative to each other along said bores (45).

21. A support wheel arrangement for a vehicle according to one or more of the preceding claims **characterised in that** the vehicle axle (12) is in front of the vertical separation line (47) of the vehicle frame (11).

22. A support wheel arrangement for a vehicle according to one or more of the preceding claims **characterised in that** the carrier bracket (43) is operatively connected to at least one further bracket (55), wherein the further bracket (55) is pivotably movably connected to at least one carrier arm (50) and the carrier bracket (43) supports the carrier arm (50) by at least one displacement means (48), the displacement means (48) being formed by a stroke cylinder (49).

23. A support wheel arrangement for a vehicle according to one or more of the preceding claims **characterised in that** the stroke cylinder (49) is displaced in dependence on the different mass loads.

24. A support wheel arrangement for a vehicle according to one or more of the preceding claims **characterised in that** the carrier arm (50) has at least one opening (51) through which the piston rod (52) or the displacement means (48) passes and wherein arranged beneath the carrier arm (50) in the region of the opening (51) is at least one further bracket (53) which has a pivotal mounting point (54) for the piston-cylinder unit (49).

25. A support wheel arrangement for a vehicle according to one or more of the preceding claims **characterised in that** in its end region operatively connected to the support wheel (25) the carrier arm (50) becomes narrower horizontally and/or vertically towards the respective wheel side (15, 16), wherein in its end region the carrier arm (50) goes with a side offset (58) into a narrower crank portion (59).

26. A support wheel arrangement for a vehicle according to one or more of the preceding claims **characterised in that** the carrier arm (50) has at least one side offset (58) in the horizontal and/or vertical direction and the support wheel (25) is arranged at the outer crank portion (59).

## Revendications

1. Agencement de roue d'appui pour véhicule, le véhicule comprenant au moins un châssis de véhicule qui porte les ensembles fonctionnels du véhicule et qui prend appui au sol par l'intermédiaire d'un train de roulement comportant au moins deux essieux de véhicule, **caractérisé en ce que** la roue d'appui au nombre d'au moins une (25) est supportée par au moins un châssis d'appui (28), et le châssis d'appui (28) est en liaison active avec au moins une partie des ensembles fonctionnels (5-9) et avec au moins un essieu de véhicule (12, 13) du train de roulement (14), la roue d'appui au nombre d'au moins une (25) étant disposée dans une zone située entre les essieux de véhicule au nombre d'au moins deux (12, 13), et la charge d'appui verticale (F) de la roue d'appui au nombre d'au moins une (25) est réglable automatiquement en fonction de la masse du véhicule (1, 2).

2. Agencement de roue d'appui pour véhicule selon la revendication 1, **caractérisé en ce que** la roue d'appui au nombre d'au moins une (25) présente un diamètre inférieur à la roue de roulement (15) qui la précède et qui fait partie de l'essieu avant (12) du train de roulement (14).

3. Agencement de roue d'appui pour véhicule selon une ou plusieurs des revendications précédentes, **caractérisé en ce que** la roue d'appui au nombre d'au moins une (25) passe dans la trace de la roue de roulement (15) qui précède la roue d'appui (25) correspondante.

4. Agencement de roue d'appui pour véhicule selon une ou plusieurs des revendications précédentes, **caractérisé en ce que** la liaison active du châssis d'appui au nombre d'au moins un (28) avec une partie des ensembles fonctionnels (5-9) est réalisée par l'intermédiaire d'une liaison articulée du châssis d'appui (28) avec le châssis de véhicule (11).

5. Agencement de roue d'appui pour véhicule selon une ou plusieurs des revendications précédentes, **caractérisé en ce que** le châssis d'appui (28) est formé par un premier bras-support (22) et par au moins un bras-support supplémentaire (27), le premier bras-support (22) étant en liaison active avec au moins une partie des ensembles fonctionnels (5-9) du véhicule (1, 2), et le bras-support supplémentaire au nombre d'au moins un (27) étant en liaison active avec l'essieu de véhicule au nombre d'au moins un (12, 13) du train de roulement (14).

6. Agencement de roue d'appui pour véhicule selon une ou plusieurs des revendications précédentes, **caractérisé en ce que** les bras-supports (22, 27) sont reliés à pivotement à au moins une partie des ensembles fonctionnels (5-9) et à l'essieu de véhicule au nombre d'au moins un (12, 13) du train de roulement (14).

7. Agencement de roue d'appui pour véhicule selon une ou plusieurs des revendications précédentes, **caractérisé en ce qu'**au moins un bras-support (22, 27) est à longueur variable.

8. Agencement de roue d'appui pour véhicule selon la revendication 7, **caractérisé en ce que** le bras-support à longueur variable au nombre d'au moins un (22, 27) est conformé en vérin (29).

9. Agencement de roue d'appui pour véhicule selon la revendication 7, **caractérisé en ce que** le bras-support à longueur variable au nombre d'au moins un (22, 27) est conformé en bras télescopique.

10. Agencement de roue d'appui pour véhicule selon une ou plusieurs des revendications précédentes, **caractérisé en ce que** la variation de longueur du bras télescopique (27) et/ou du vérin (29) est amortie par l'intermédiaire d'au moins un élément amortisseur.

11. Agencement de roue d'appui pour véhicule selon une ou plusieurs des revendications précédentes, **caractérisé en ce qu'**au moins une roue d'appui (25) est conformée en roue suiveuse (34).

12. Agencement de roue d'appui pour véhicule selon une ou plusieurs des revendications précédentes, **caractérisé en ce qu'**au moins une roue d'appui (25) est conçue de manière directrice, et le mouvement de direction est couplé au mouvement de direction du véhicule (1).

13. Agencement de roue d'appui pour véhicule selon une ou plusieurs des revendications précédentes, **caractérisé en ce que** la roue d'appui au nombre d'au moins une (25) peut être mise en et hors prise.

14. Agencement de roue d'appui pour véhicule selon une ou plusieurs des revendications précédentes, **caractérisé en ce que** le bras-support supplémentaire au nombre d'au moins un (27) agit sur le véhicule (1, 2) dans la zone du centre de gravité (S) du véhicule (1, 2).

15. Agencement de roue d'appui pour véhicule selon une ou plusieurs des revendications précédentes, **caractérisé en ce que** la charge d'appui verticale (F) d'une pluralité de roues d'appui (25) est réglable de manière indépendante pour chacune d'entre elles.

16. Agencement de roue d'appui pour véhicule selon une ou plusieurs des revendications précédentes, **caractérisé en ce que** la charge d'appui verticale (F) de la roue d'appui au nombre d'au moins une (25) est réglable de manière dynamique.

17. Agencement de roue d'appui pour véhicule selon une ou plusieurs des revendications précédentes, **caractérisé en ce que** la roue d'appui au nombre d'au moins une (25) est supportée par au moins un châssis d'appui (28), et le châssis d'appui (28) est en liaison active avec au moins une partie des ensembles fonctionnels (5-9) et avec au moins un essieu de véhicule (12, 13) du train de roulement (14), la roue d'appui au nombre d'au moins une (25) étant disposée dans une zone située entre les essieux de véhicule au nombre d'au moins deux (12, 13), et à la roue d'appui au nombre d'au moins une (25) étant associé un dispositif de pivotement (42) et le dispositif de pivotement (42) étant disposé sensiblement au-dessous du châssis de véhicule (11) et étant relié à au moins une console porteuse (43) disposée entre le châssis de véhicule (11) et l'essieu de véhicule (12).

18. Agencement de roue d'appui pour véhicule selon une ou plusieurs des revendications précédentes, **caractérisé en ce que** la console porteuse au nombre d'au moins une (43) s'étend sensiblement de l'essieu de véhicule (12) vers l'arrière du véhicule.

19. Agencement de roue d'appui pour véhicule selon une ou plusieurs des revendications précédentes, **caractérisé en ce que** la console porteuse (43) est pourvue de trous (45), les trous (45) permettant, au moyen de d'éléments de fixation (46), d'établir une liaison fixe entre la console porteuse (43) et le châssis de véhicule (11).

20. Agencement de roue d'appui pour véhicule selon une ou plusieurs des revendications précédentes, **caractérisé en ce que** le châssis de véhicule (11) et/ou l'essieu de véhicule (12) peuvent être déplacés l'un par rapport à l'autre le long de ces trous (45).

21. Agencement de roue d'appui pour véhicule selon une ou plusieurs des revendications précédentes, **caractérisé en ce que** l'essieu de véhicule (12) se trouve devant la ligne de séparation verticale (47) du châssis de véhicule (11).

22. Agencement de roue d'appui pour véhicule selon une ou plusieurs des revendications précédentes, **caractérisé en ce que** la console porteuse (43) est en liaison active avec une console supplémentaire (55), la console supplémentaire (55) étant reliée à pivotement à au moins un bras-support (50), et la console porteuse (43) supportant le bras-support (50) par l'intermédiaire d'au moins un moyen de déplacement (48) le moyen de déplacement (48) étant formé par un vérin (49).

23. Agencement de roue d'appui pour véhicule selon une ou plusieurs des revendications précédentes, **caractérisé en ce que** le vérin (49) se déplace en fonction des différentes masses supportées.

24. Agencement de roue d'appui pour véhicule selon une ou plusieurs des revendications précédentes, **caractérisé en ce que** le bras-support (50) est pourvu d'au moins une découpe (51) à travers laquelle passe la tige de piston (52) ou le moyen de déplacement (48) et, au-dessous du bras-support (50), dans la zone de la découpe (51) étant disposée au moins une console supplémentaire (53) qui comporte un point d'articulation (54) pour l'ensemble piston-cylindre (49).

25. Agencement de roue d'appui pour véhicule selon une ou plusieurs des revendications précédentes, **caractérisé en ce que**, dans sa zone extrême en liaison active avec la roue d'appui (25), le bras-support (50) se rétrécit horizontalement et/ou verticalement vers le côté de la roue de roulement correspondante (15, 16), et le bras-support (50) se prolonge, dans sa zone d'extrémité pourvue d'un décrochement latéral (58), par une portion coudée plus étroite (59).

26. Agencement de roue d'appui pour véhicule selon une ou plusieurs des revendications précédentes, **caractérisé en ce que** le bras-support (50) présente, dans la direction horizontale et/ou verticale, au moins un décrochement latéral (58), et la roue d'appui (25) est disposée sur la portion coudée extérieure (59).
